# FASCICULE DE BREVET EUROPEEN

(11) **EP 1 860 924 B1**
(45) Date de publication et mention de la délivrance du brevet: **27.04.2016**
(21) Numéro de dépôt: 06360018.3
(22) Date de dépôt: 22.05.2006
(51) Int. Cl.: H05B 37/02

(54) **Dispositif de détection de présence associé à une minuterie**
Näherungsschalter mit einem Timer
Motion sensor switch associated with a timer

(43) Date de publication de la demande: 28.11.2007
(73) Titulaire: Hager Controls SAS, 67700 Saverne (FR)
(72) Inventeur: Woelffel, Vincent, 67520 Marlenheim (FR); Frommweiler, 67700 Otterswiller (FR)
(74) Mandataire: Nuss, Laurent

(56) Documents cités:
- EP-A1- 1 121 001
- DE-U1- 20 118 462
- GB-A- 2 330 704
- US-A- 5 557 173
- US-B1- 6 466 826

## Description

La présente invention concerne un dispositif de détection de présence associé à une minuterie et destiné par conséquent à être connecté entre deux fils à la place d'un bouton-poussoir classiquement utilisé dans ce type de circuit.

Une telle association est connue, décrite par exemple dans le document US 6 466 826 divulguant un dispositif de détection de présence associé à une minuterie, mais cette dernière est interne au détecteur et prévue pour une fonction spécifique. Il ne peut donc pas y avoir de connexion entre phase ou neutre du secteur et la minuterie à la place d'un bouton poussoir.

Ces dispositifs de détection comprennent usuellement une tête de détection munie d'un microcontrôleur et un étage électronique de puissance comportant un circuit de commande apte à gérer d'une part le déclenchement de la minuterie en cas de détection d'une présence, et d'autre part l'alimentation de la tête même en cas de coupure de durée limitée de l'alimentation à ses bornes.

L'installation d'un dispositif de détection en série avec une minuterie, par exemple dans le cadre de la rénovation d'une cage d'escalier impliquant un remplacement des boutons-poussoirs classiques, ne relève pas de l'évidence et pose au contraire un certain nombre de problèmes. Parmi les questions à résoudre, il doit être possible de brancher en parallèle une vingtaine de ces détecteurs de manière à pouvoir équiper dans de bonnes conditions des cages d'escalier d'immeubles, ce qui implique la maîtrise de leur alimentation en termes de niveau mais aussi sur le plan de la durée puisque le fonctionnement de certaines minuteries implique des coupures régulières d'alimentation, lors de la commutation de la charge d'éclairage.

Par ailleurs, le but étant d'équiper des cages d'escalier parfois anciennes, les dispositifs de détection de l'invention doivent pouvoir être installés de manière quasi universelle sans modifier le câblage existant, et fonctionner par conséquent avec tout type de minuteries, électroniques ou électromécaniques, que celles-ci soient modifications majeures les boutons-poussoirs existants, l'encombrement desdits dispositifs doit être limité pour pouvoir les implanter dans le volume disponible, dans un mur, pour la pose d'un bouton-poussoir.

Ces différents objectifs génèrent des contraintes qui doivent évidemment toutes être prises en compte pour proposer une solution générale adéquate. Ainsi, par exemple, les minuteries électromécaniques fonctionnent de manière telle qu'après déclenchement, la bobine n'est pas alimentée pendant environ 20 secondes, afin d'éviter d'y dissiper en permanence un courant important (plus d'un ampère) dans le cas où le bouton-poussoir reste appuyé. Un dispositif de détection, lorsqu'il est raccordé à une telle minuterie, n'est donc pas alimenté pendant 20 secondes après une détection ou un appui sur un bouton-poussoir. Cette condition contraignante doit bien entendu être gérée par la solution.

Par ailleurs, certaines minuteries fonctionnent en simple alternance, alors que d'autres travaillent en double alternance, ce qui modifie corollairement l'intensité consommée par le circuit électronique de commande mentionné ci-dessus.

Un tel circuit, qui gère à titre principal l'alimentation de la tête et la simulation de l'appui sur un bouton-poussoir, a déjà été proposé dans le passé avec une solution, pour la partie alimentation, basée sur des résistances chutrices imposant une chute de tension appropriée pour la commande de la tête de détection. En double alternance, deux résistances de puissance élevée, de l'ordre de 2 watts, ont ainsi été mises en parallèle en vue d'alimenter simultanément le microcontrôleur de la tête de détection et une capacité réservoir permettant de faire face aux micro-coupures d'alimentation. La commande de la minuterie se fait quant à elle via un transistor MOS dont la protection est obtenue à l'aide d'un fusible d'une valeur de l'ordre de 500 mA tenant compte des courants mis en jeu dans le transistor dans une telle configuration.

Les inconvénients d'une telle solution sont nombreux. En premier lieu, les puissances mises en jeu dans la résistance ou les résistances chargées de faire chuter la tension sont importantes. C'est la raison pour laquelle il est préférable de mettre en parallèle plusieurs résistances. L'échauffement qui en résulte dans le produit reste cependant élevé. Ainsi, si la température ambiante est de l'ordre de 25°C, cette température peut dépasser les 60°C en fonctionnement avec une minuterie mono-alternance, et dépasser les 100°C avec une minuterie double alternance. Cette solution entraîne indubitablement un risque de fragilisation de l'électronique.

Elle n'est pas performante non plus en termes de consommation. L'utilisation de résistance(s) entraîne une augmentation de la consommation si la tension secteur augmente, consommation qui double lorsque la minuterie fonctionne en double alternance. Cette solution entraîne indubitablement un risque de fragilisation de l'électronique.

Elle n'est pas performante non plus en termes de consommation. L'utilisation de résistance(s) entraîne une augmentation de la consommation si la tension secteur augmente, consommation qui double lorsque la minuterie fonctionne en double alternance. Cela a évidemment une incidence directe sur les possibilités de fonctionnement en association avec des minuteries, du fait du seuil de déclenchement qui les caractérise. Concrètement, le nombre de dispositifs de détection que l'on peut disposer en parallèle devient limité, surtout en fonctionnement double alternance; où ce nombre ne dépasse pas 3 à 4 unités.

Pour charger la capacité réservoir supposée prendre en charge l'alimentation de la tête de détection en cas de coupure secteur, cette solution provoque de plus un appel de courant au démarrage qui risque de faire entrer certaines minuteries en mode test si un appui sur le bouton-poussoir est détecté à la mise sous tension. C'est également ce qui se produit s'il y a trop de dispositifs de détection en parallèle sur le circuit.

Enfin, ce type de configuration ne permet pas l'utilisation de minuteries électromécaniques, car il ne gère pas de coupure d'alimentation secteur allant jusqu'à 20 secondes.

Afin d'éviter les surintensités telles que mentionnées auparavant, on connaît du brevet EP 1 121 001 un dispositif de commutation électrique utilisant un limiteur de courant associé à un réservoir de stockage d'énergie. Cependant ce réservoir ne peut alimenter une charge que pendant certaines périodes et non pas pendant un nombre suffisant de secondes (comme 20s dans le cas d'une minuterie). De plus, ce dispositif ne permet pas de disposer plusieurs charges, de type détecteur, en parallèle.

La présente invention remédie à ces inconvénients, en proposant un dispositif de détection qui fonctionne aussi bien avec des minuteries mono et double alternance, permet l'utilisation de minuteries électromécaniques et autorise l'implantation, dans toutes les hypothèses envisagées, d'une vingtaine de dispositifs en parallèle.

Pour réaliser ces objectifs, et d'autres qui apparaîtront dans le texte, le dispositif de détection de présence de l'invention se caractérise à titre principal en ce que l'étage d'alimentation du circuit électronique de commande est basé sur un limiteur de courant fournissant une intensité de courant constante indépendante des variations de la tension du secteur et n'appelant pas de courants transitoires plus élevés qu'en fonctionnement normal au démarrage après coupure de la tension à ses bornes connectée à un étage de commutation commandé par le microcontrôleur de la tête de détection et permettant de commuter en parallèle à la charge résistive une seconde charge resistive en vue d'ajuster la valeur du courant produit par le limiteur.

Dès détection d'une minuterie mono-alternance en amont, il est en effet nécessaire de disposer du double de courant pour pouvoir alimenter la charge placée en aval.

Ledit limiteur de courant peut par conséquent être vu comme une source de courant constante, impliquant une consommation qui est toujours la même et ne générant dès lors pas d'échauffement variable.

Plus précisément, le limiteur de courant est constitué par un transistor de puissance de type MOSFET polarisé en source de courant constant par au moins une diode Zener connectée entre la grille du transistor et une borne d'une charge résistive par ailleurs raccordée à la source dudit transistor. L'utilisation d'un transistor MOSFET garantit bien un échauffement très faible, et ne provoque aucun appel de courant à la mise sous tension.

Le transistor de puissance est choisi de manière à pouvoir fonctionner avec la tension secteur, et il est polarisé, ou plus généralement placé dans un étage du circuit conçu pour fournir un courant constant. Ce courant est en pratique de l'ordre de 2,4 mA, valeur qui permet de gérer la consommation de la tête de détection en fonctionnement double alternance.

En mono-alternance, le circuit de l'invention est également utilisable en ce qu'il permet de gérer comme on l'a vu une modification, par exemple un doublement, du courant d'alimentation.

Dans ce circuit, l'étage de commutation est connecté à la source du transistor MOSFET.

L'étage de commutation est, de préférence, constitué d'au moins un transistor bipolaire, la base du transistor d'entrée étant commandée par un signal issu du microcontrôleur, la seconde charge résistive étant disposée en sortie du transistor de sortie, la charge et le transistor de sortie étant connectés en parallèle à la première charge résistive. De manière classique, le transistor d'entrée est un NPN et le transistor de sortie est un PNP.

De préférence encore, les charges résistives sont de même valeur. Le courant nécessité par une minuterie simple alternance est double de celui qui peut être utilisé pour l'alimentation de l'électronique dans l'hypothèse de l'utilisation d'une minuterie double alternance. En commutant une résistance de même valeur en parallèle à celle qui était disposée initialement dans le circuit, on aboutit très simplement au doublement du courant.

La sortie de l'étage limiteur de courant est connectée à l'entrée d'un régulateur de tension dont la sortie alimente la tête de détection, et une capacité réservoir disposée aux bornes d'entrée dudit régulateur.

commandée par un signal de détection de présence issu du microcontrôleur, ledit transistor étant en fait connecté entre la minuterie et la phase ou le neutre du secteur.

Le niveau de tension de la sortie du microcontrôleur utilisée pour la commande de la grille doit cependant être adapté à ladite commande.

Le signal issu du microcontrôleur est en pratique amplifié à l'aide d'un étage à deux transistors bipolaires montés en cascade, ledit signal étant appliqué à la base du transistor d'entrée, le signal amplifié en sortie du second transistor étant envoyé vers la grille du MOSFET.

La tension de polarisation de cet étage à deux transistors est en fait la tension d'entrée du régulateur de tension placé en sortie de l'étage d'alimentation.

Par opposition à l'utilisation d'un fusible apparaissant dans l'art antérieur mentionné auparavant, le transistor MOSFET de déclenchement de la minuterie est protégé par un étage électronique de protection qui le bloque en cas de surintensité.

Cet étage de protection agit en réalité comme un "fusible électronique", et est constitué d'au moins une résistance shunt connectée à la source du transistor MOSFET, et polarisant la base d'un transistor bipolaire de protection dont le collecteur est relié à la grille du MOSFET.

Le transistor bipolaire de protection fonctionne simplement en saturé / bloqué. Une éventuelle surintensité traversant le transistor MOS élève sa tension base-émetteur et le rend passant, provoquant une chute de la tension de grille du MOSFET, lequel se bloque par contrecoup.

De préférence, des résistances intermédiaires sont prévues pour limiter l'intensité dans le collecteur et la base dudit transistor de protection.

Selon une possibilité additionnelle, une varistance est connectée aux bornes du transistor MOSFET de commande de la minuterie.

Selon une troisième fonction principale, le circuit électronique de commande de l'invention comporte un étage de détection de la présence de tension à ses bornes. Cette fonction est tout à fait fondamentale car, dans des conditions usuelles de fonctionnement, lorsque le MOSFET commute pour commander la minuterie, la tension à ses bornes devient presque nulle. La capacité réservoir prend alors le relais pour l'alimentation du produit. Mais si les dispositifs de détection déclenchent les uns après les autres sans laisser aux capacités réservoir le temps de se recharger, les produits risquent de ne plus être alimentés.

Pour éviter ceci, il est prévu d'empêcher chaque dispositif selon l'invention de commuter si la tension à ses bornes est nulle depuis plus de 20 ms (une période du secteur). Cela a pour finalité d'empêcher les avalanches de pincement qui risquent de vider les capacités réservoir.

Selon une possibilité, l'étage de détection comporte un transistor bipolaire dont la base est polarisée entre la minuterie et la phase ou neutre, et dont le collecteur est relié à la tension de sortie régulée de l'étage d'alimentation. La tension du collecteur constitue alors un signal indiquant la présence d'alimentation. Ce signal est transmis en permanence au microcontrôleur.

Dans le cas où il y a présence de tension secteur, le microcontrôleur voit sur son entrée un signal carré dont la fréquence dépend du type de minuterie (mono ou double alternance). Lorsque la tension secteur disparaît, quelle qu'en soit la raison (coupures secteur, pincement d'un MOS ou appui sur un bouton-poussoir), l'entrée du microcontrôleur, c'est-à-dire la tension au collecteur du transistor bipolaire, reste à l'état haut. Cette information est traitée par le programme du microcontrôleur pour empêcher la commande du transistor MOSFET, même en cas de détection de mouvement, pendant une durée déterminée.

De préférence, un pont de diode est connecté aux bornes du circuit électronique de commande. Ce pont redresseur permet de polariser correctement le transistor de commande de la minuterie, quelle que soit l'alternance (positive ou négative). Il présente également l'avantage de supprimer la polarisation du système, puisque les entrées phase / neutre ou issue de la minuterie, c'est-à-dire en fait les bornes du circuit selon l'invention, deviennent interchangeables.

Pour éviter une décharge trop rapide de la capacité réservoir, et afin qu'elle ne perturbe pas l'étage de scrutation de la présence secteur, c'est-à-dire en fait l'étage de détection de présence de tension aux bornes du circuit de commande de l'invention, il est prévu d'utiliser une diode connectée entre les entrées respectives de l'étage de détection de présence et de l'étage d'alimentation du circuit.

L'invention prévoit également de revoir les têtes de détection usuelles de manière à optimiser leur consommation. Ces dernières comportent classiquement, outre le microcontrôleur déjà mentionné, un photo-détecteur, un potentiomètre pour son réglage (détection de la luminosité ambiante), un capteur infrarouge et un étage d'amplification du signal qui en est issu. Cette optimisation s'avère en particulier nécessaire dans le cas où le circuit de l'invention est associé à une minuterie électromécanique, pour gérer au mieux l'absence d'alimentation de 20 secondes.

Pour limiter le courant, afin de remplir l'exigence de tenue dans le temps à des coupures supérieures à 20 secondes, outre le choix immédiat de composants à très basse consommation, il est notamment prévu que le photo-détecteur et le potentiomètre permettant son réglage soient alimentés via une sortie du microcontrôleur.

Il est donc possible de les priver d'alimentation dès que nécessaire pour limiter la consommation de l'ensemble. Ainsi, à la mise sous tension, ledit potentiomètre et le photo-détecteur ne sont en réalité pas alimentés, le microcontrôleur pouvant rester en mode basse puissance pendant environ 5 secondes au démarrage. Pratiquement tout le courant sera alors disponible pour la charge de la capacité réservoir. De même, dès qu'une coupure est détectée, le potentiomètre et le photo-détecteur ne sont plus alimentés, et le microcontrôleur passe en mode basse consommation.

La consommation de courant devient alors très faible (inférieure à 80 µA), et l'autonomie est dès lors bien plus grande.

L'invention va à présent être décrite plus en détails, en référence aux figures annexées, pour lesquelles :
- les figures 1 et 2 montrent le câblage traditionnel (3 et 4 fils) d'une minuterie, en introduisant la possibilité de remplacement d'un ou plusieurs boutons-poussoirs par des systèmes de détection selon l'invention ;
- la figure 3 représente un schéma bloc du fonctionnement d'une tête de détection ;
- la figure 4 montre de façon plus détaillée ladite tête de détection ;
- la figure 5 est un schéma synoptique de fonctionnement du circuit électronique de commande de l'invention ;
- la figure 6 montre un schéma électronique du circuit électronique de commande selon l'invention.

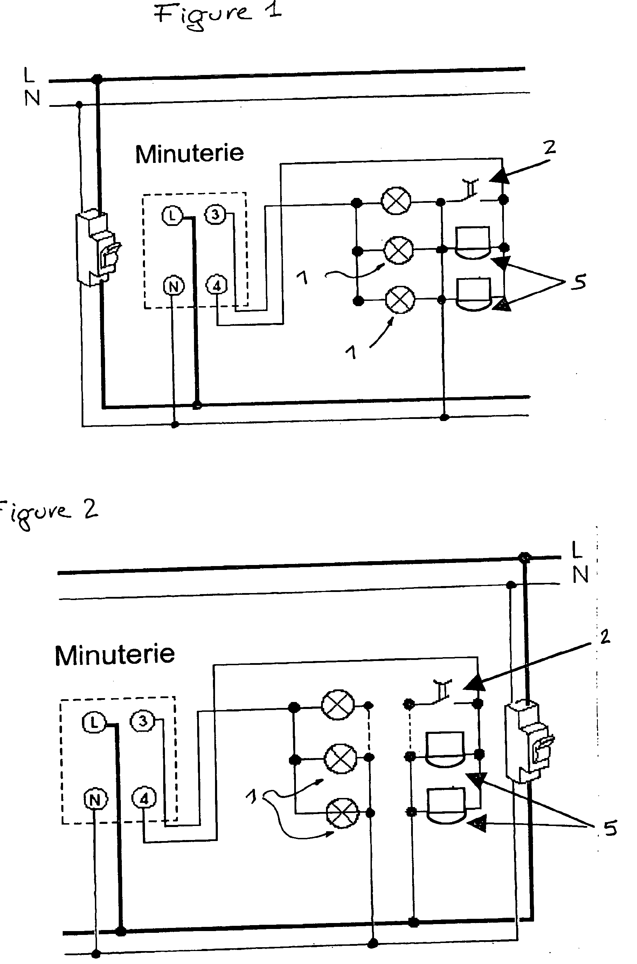

En référence à la figure 1, la minuterie comporte deux sorties (3) et (4) connectées en parallèle respectivement à des sources de lumière (1) et à des dispositifs de commande constitués soit d'un bouton-poussoir (2), soit d'un dispositif de détection (5) selon l'invention. Ce mode de connexion est appelé à branchement trois fils car les éléments en parallèle précités sont tous reliés au neutre N.

En figure 2, le mode de branchement à la minuterie est identique, la différence réside en ce que les sources de lumière (1) sont reliées au neutre N, alors que les dispositifs de commande (bouton-poussoir (2), dispositif de détection selon l'invention (5)) sont reliés à la phase L.

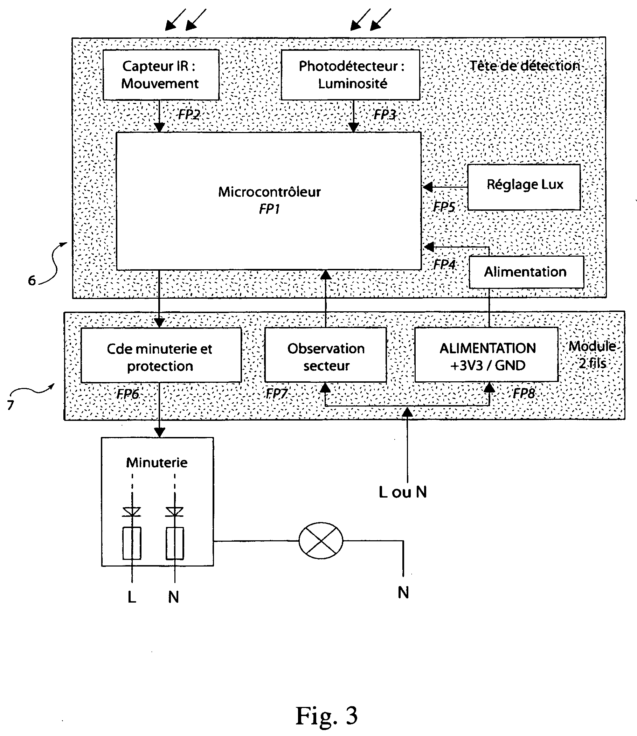

La figure 3 montre un schéma bloc d'un dispositif de détection de présence selon l'invention. La tête (6) traite le signal de sortie du capteur infrarouge (FP2), réalise la mesure de luminosité notamment effectuée par un photo-détecteur (FP3) et gère les réglages au moyen d'un potentiomètre (FP5). Un microcontrôleur (FP1) traite les différents signaux.

Le capteur de mouvement (FP2) est un composant passif à infrarouge qui détecte les mouvements de personnes se déplaçant dans son cône de détection. Le signal issu dudit composant est en général amplifié à l'aide d'un amplificateur opérationnel avant d'être transmis au microcontrôleur (FP1). Le photo-détecteur (FP3) permet de mesurer le niveau de luminosité ambiante, et d'activer la détection si la luminosité tombe sous un seuil dit crépusculaire.

Le réglage réalisé en (FP5) permet d'adapter le seuil de luminosité en fonction de l'environnement.

Un module de puissance (7), par exemple connecté à la tête de détection à l'aide d'un connecteur, comporte le circuit électronique de commande de l'invention tel qu'étudié dans les figures suivantes. C'est dans ce module de puissance (7) que se trouve par conséquent l'étage de commande de la minuterie et son étage de protection, l'étage de scrutation du secteur permettant la détection d'une coupure d'alimentation (FP7), ainsi que l'étage d'alimentation (FP8) du microcontrôleur (FP1) connecté à ce dernier via une entrée d'alimentation (FP4) située dans la tête (6).

Ce module de puissance (7) est connecté par deux fils d'une part à la minuterie et d'autre part à la phase ou au neutre, d'où la possibilité de remplacer, dans un circuit de commande de minuterie, un simple bouton-poussoir par le dispositif de détection de l'invention.

La direction des flèches montre de manière schématique la direction des signaux de commande ou de transfert d'information. Ainsi, l'alimentation (FP8) est dirigée vers le microcontrôleur (FP1), ainsi que les signaux de scrutation du secteur (FP7). La commande de la minuterie est à l'origine issue d'un signal de détection de mouvement en provenance de (FP2) à destination du microcontrôleur (FP1), ledit signal étant ensuite envoyé à l'étage (FP6) de commande de la minuterie, à destination finale de cette dernière.

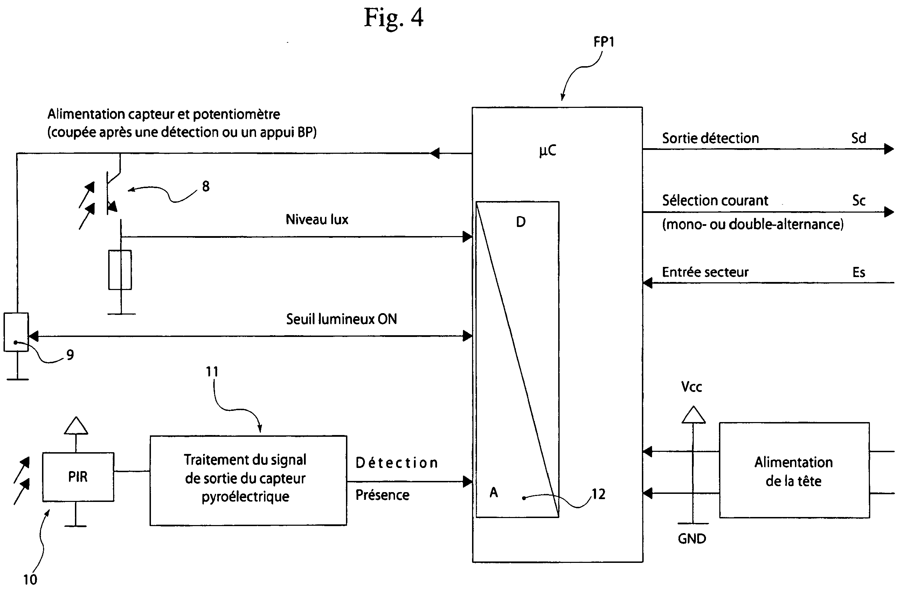

La figure 4 montre de manière un peu plus détaillée le fonctionnement de la tête de détection (6). Le niveau de luminosité, permettant la détection du seuil crépusculaire, est mesuré à l'aide d'un phototransistor (8) intégré à l'étage (FP3). L'étage (FP5) de réglage de la luminosité est basé sur un potentiomètre (9) dont la sortie variable est connectée au microcontrôleur (FP1). C'est l'utilisateur qui règle le niveau de luminosité souhaité à l'aide du potentiomètre, et ce niveau est lu par le microcontrôleur.

Le capteur passif à infrarouge (10) transmet son signal à un amplificateur opérationnel (11) dont la sortie est connectée au microcontrôleur (FP1).

Le signal de niveau de luminosité en provenance du photo transistor (8), le signal de réglage du seuil lumineux entre le potentiomètre (9) et le microcontrôleur (FP1) et le signal amplifié par l'amplificateur opérationnel (11) sont connectés à des entrées analogiques dudit microcontrôleur (1), puis transformés en un signal numérique par un circuit analogique / digital (12).

Le microcontrôleur (FP1) comporte par ailleurs une entrée de scrutation du secteur (Eₛ), ainsi que deux entrées d'alimentation, à un niveau de tension de l'ordre de 3,3 volts d'une part, et à la masse d'autre part.

En sortie, le microcontrôleur (FP1) émet un signal de détection de présence (S_{d}), envoyé comme on l'a dit à destination de l'étage de commande de la minuterie (FP6), et une sortie de sélection du courant (S_{c}) (mono ou double alternance) dont le signal est envoyé vers l'étage de commutation d'une à deux charges résistives en sortie du générateur de courant formant la base de l'étage d'alimentation (FP8).

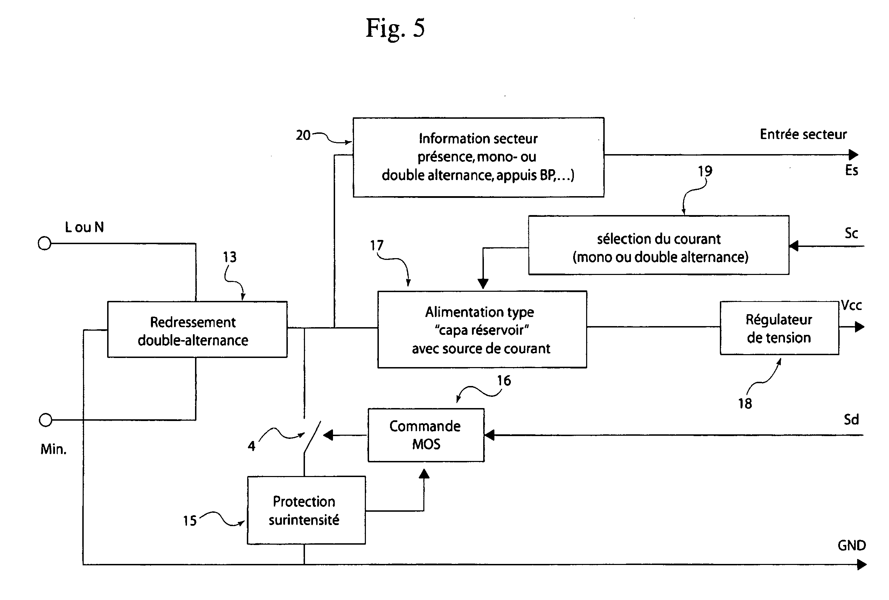

Un schéma synoptique du circuit électronique de commande selon l'invention est montré en figure 5. L'étage (ou pont) de redressement double alternance (13) est connecté entre la phase ou le neutre et la minuterie. Cet étage (13) permet l'alimentation du circuit, et notamment d'un bouton-poussoir simulé (14) sous forme d'un transistor MOSFET. En sortie de ce transistor, un étage de protection contre les surintensités (15) permet la protection du transistor MOS (14). Ce transistor MOSFET (14) est commandé via un étage de polarisation / commande (16) qui retransmet, à un niveau de tension compatible avec la commande de sa grille, le signal de sortie (S_{d}) issu du microcontrôleur (FP1).

Le circuit électronique de commande comporte par ailleurs une alimentation à source de courant (17) permettant d'alimenter une capacité réservoir ainsi qu'un régulateur de tension (18) dont la sortie alimente le microcontrôleur (FP1).

Le courant issu de la source de courant dépend du signal de sélection du courant émis par le microcontrôleur (FP1), qui permet la commutation d'un étage de sélection du courant (19) (mono / double alternance ).

Enfin, l'étage (20) donne une information sur l'état du secteur, c'est-à-dire sur la présence d'alimentation aux bornes du circuit de commande, sur la nature du signal (mono ou double alternance) de la minuterie, sur la survenue d'un ou plusieurs appuis sur les boutons-poussoirs, etc. Le signal qui en est issu est envoyé sur l'entrée secteur (Eₛ) du microcontrôleur (FP1).

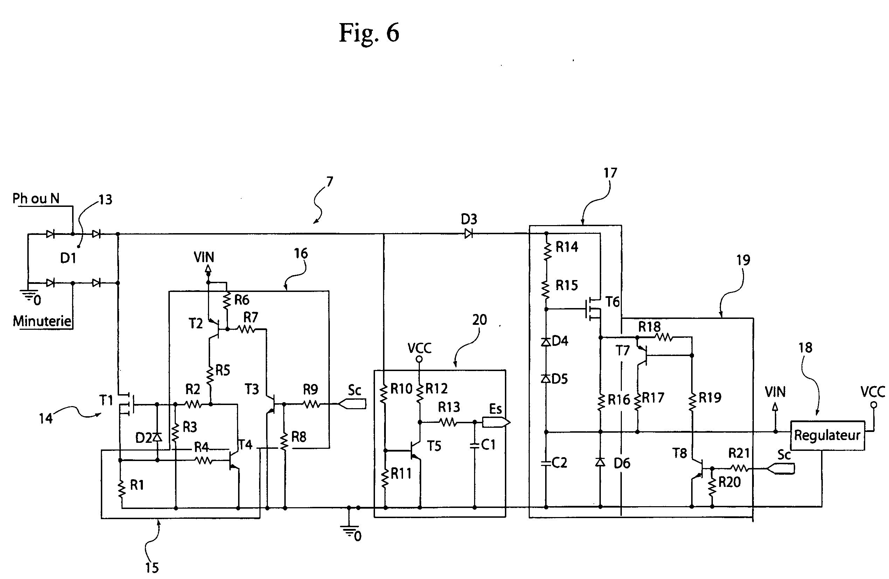

Une configuration possible de circuit électronique pour la réalisation de différentes fonctions apparaissant en figure 5 est montrée en figure 6. Le pont redresseur (13) est classiquement constitué de 4 diodes qui sont choisies selon la valeur de courant admissible pour le transistor MOS (14). Le "fusible électronique" est constitué par l'étage (15), comprenant une résistance (R1) connectée à la source du MOS (14), faisant office de résistance shunt de protection contre d'éventuelles surintensités. La diode (D2) a pour fonction de protéger la grille du MOS (14). La résistance (R1) commande un transistor bipolaire (T4) fonctionnant en saturé / bloqué. En cas de surintensité, le transistor (T4) devient passant, et bloque par conséquent la grille du MOS (14), puisque la tension de grille chute. La jonction drain / source est ainsi protégée. La résistance (R4) est prévue pour protéger la base du transistor (T4).

L'étage de commande (16) du MOS (14) interagit bien entendu avec l'étage de protection (15). Sa première fonction est d'amplifier le signal de la sortie (S_{d}) en provenance du microcontrôleur et indiquant une détection de présence. Cette amplification est réalisée par connexion en cascades de deux transistors bipolaires respectivement (T3) (NPN) et (T2) (PNP) polarisés par les résistances respectivement (R8, R9) et (R6, R7).

La tension de polarisation du montage est V_{IN}, soit la tension d'entrée du régulateur (18). Une résistance (R5) est disposée en sortie du transistor (T2) et connectée au collecteur du transistor (T4) en vue de limiter le courant dans (T4). Le blocage du MOS en l'absence de signal S_{d} est garanti par la résistance de tirage à la masse (R3), choisie de forte valeur pour limiter le courant.

Par ailleurs, une résistance (R2) est disposée entre la commande et la grille du MOS (14), pour éviter d'éventuelles oscillations sur ladite grille due à un possible réseau (LC) parasite.

Le générateur de courant de l'étage d'alimentation (17) se base sur le transistor MOS (T6). La tension V_{GS} est connue, et la tension aux bornes des diodes Zener (D4 et D5) est fixée : la tension aux bornes de la résistance (R16) est donc en principe connue, et par conséquent le courant qui la traverse. Le générateur de courant est ainsi constitué.

Le condensateur (C2) est utilisé comme capacité réservoir, permettant de tenir les coupures secteur et la durée du pincement en cas de détection. Une diode Zener (D6) permet de protéger l'entrée du régulateur (18), en limitant la tension d'entrée sous le seuil maximal admis par le circuit choisi pour ledit régulateur (18), à savoir 10 volts. Les résistances (R14) et (R15) servent à la polarisation de la grille du MOS (T6). Une diode (D3) est disposée en entrée de l'étage d'alimentation (17), pour éviter une décharge trop rapide de la capacité de réservoir (C2), et pour qu'elle ne perturbe pas l'étage de scrutation du secteur (20).

La source de courant fonctionnant avec un tel étage d'alimentation (17) délivre un courant constant prévu pour un fonctionnement en double alternance. Si une minuterie fonctionnant en mono alternance est utilisée, utilisation détectée par l'étage de scrutation du secteur (20), il faut le double du courant pour alimenter la même électronique, ce qui peut par exemple être réalisé en commutant une résistance de même valeur en parallèle à la résistance (R16). Celle-ci, la résistance (R17), est mise en oeuvre à l'aide d'une cascade de transistors bipolaires (T7, T8), respectivement (PNP et NPN), polarisés par les résistances (R18, R19) d'une part, et (R20, R21) d'autre part. Le signal d'entrée provient de la sortie (S_{c}) du microcontrôleur, émettant un signal de sélection du courant. Dans l'hypothèse où un tel signal est reçu en entrée de l'étage de commutation (19), les transistors (T8) puis (T7) deviennent passants, connectant de fait la résistance (R17) en parallèle avec la résistance (R16). Ces deux résistances ayant la même valeur, la résistance équivalente est divisée par deux, et le courant produit par le générateur double par conséquent.

L'étage (20) de détection de présence du courant, qui a pour objectif d'empêcher les avalanches de pincement risquant de vider la capacité réservoir (C2), fonctionne de la manière suivante : dans le cas où il y a présence d'une tension secteur, le transistor bipolaire (T5), dont la base est polarisée par les résistances (R10 et R11), fonctionne en saturé / bloqué, à la fréquence du secteur (50Hz en mono- et 100Hz en double-alternance). Ce signal est retransmis à l'entrée (Eₛ) du microcontrôleur (FP1). A l'inverse, dès qu'une coupure est détectée, le transistor (T5) se bloque, et son collecteur passe à un niveau haut, retransmis à (FP1).

Cet étage de détection (20) peut également être employé pour la détection d'un fonctionnement en mono ou en double alternance, car la fréquence du signal carré obtenu sur (Eₛ) change comme mentionné ci-dessus.

Le circuit de la figure 6 est une configuration possible d'un circuit de commande d'une tête de détection, qui ne peut cependant être considérée comme limitative de la présente invention.

## Revendications

1. Dispositif de détection de présence (5) associé à une minuterie, connecté entre phase L ou neutre N du secteur et ladite minuterie à la place d'un bouton-poussoir (2) et comportant une tête de détection (6) munie d'un microcontrôleur (FP1) et un circuit électronique de commande (7) apte à gérer d'une part le déclenchement de la minuterie en cas de détection d'une présence et d'autre part l'alimentation de la tête (6) même en cas de coupure de durée limitée de la tension à ses bornes,
**caractérisé en ce que** l'étage d'alimentation (17) dudit circuit (7) alimentant la tête de détection est basé sur un limiteur de courant fournissant une intensité de courant constante indépendante des variations de la tension du secteur, impliquant une consommation qui est toujours la même et ne générant pas d'échauffement variable, connecté à un étage de commutation (19) commandé par le microcontrôleur (FP1) de la tête de détection (6), celui-ci détectant si la minuterie est une minuterie mono ou double-alternance, et faisant commuter en parallèle à la charge résistive (R16), une seconde charge résistive (R17), afin de doubler le courant du limiteur de courant lorsqu'une minuterie mono-alternance est détectée.

2. Dispositif de détection de présence (5) selon la revendication précédente, **caractérisé en ce que** le limiteur de courant est constitué par un transistor de puissance (T6) de type MOSFET polarisé en source de courant constant par au moins une diode Zener (D4, D5) connectée entre la grille du transistor et une borne d'une charge résistive (R16, R17) par ailleurs raccordée à la source du transistor (T6).

3. Dispositif de détection de présence (5) selon la revendication précédente, **caractérisé en ce que** l'étage de commutation (19) est connecté à la source du transistor (T6).

4. Dispositif de détection de présence (5) selon la revendication précédente, **caractérisé en ce que** l'étage de commutation (19) est constitué d'au moins un transistor bipolaire (T7, TB) polarisé, la base du transistor (TB) d'entrée étant commandée par un signal (Sc) issu du microcontrôleur (FP1), la seconde charge résistive (R17) étant disposée en sortie du transistor de sortie (T7), la charge (R17) et le transistor (T7) étant connectés en parallèle à la première charge résistive (R16).

5. Dispositif de détection de présence (5) selon l'une des revendications 3 et 4, **caractérisé en ce que** les charges résistives (R16, R17) sont de même valeur.

6. Dispositif de détection de présence (5) selon l'une quelconque des revendications précédentes, **caractérisé en ce que** la sortie du limiteur de courant est connectée à l'entrée d'un régulateur de tension (18) dont la sortie (Vcc) alimente la tête de détection (6), et à une capacité réservoir (C2) disposée aux bornes d'entrée dudit régulateur (18).

7. Dispositif de détection de présence (5) selon l'une quelconque des revendications précédentes, **caractérisé en ce que** l'étage de déclenchement (FP6) de la minuterie comporte un transistor MOSFET (14) dont la grille est commandée par un signal (Sd) de détection de présence issu du microcontrôleur (FP1), ledit transistor (14) étant connecté entre la minuterie et la phase L ou le neutre N du secteur.

8. Dispositif de détection de présence (5) selon la revendication précédente, **caractérisé en ce que** le signal (Sd) issu du microcontrôleur (FP1) est amplifié à l'aide d'un étage à deux transistors bipolaires (T2, T3) montés en cascade, ledit signal (Sd) étant appliqué à la base du transistor d'entrée (T3), le signal amplifié en sortie du second transistor (T2) étant envoyé vers la grille du MOSFET (14).

9. Dispositif de détection de présence (5) selon la revendication précédente, **caractérisé en ce que** la tension de polarisation de l'étage à deux transistors (T2, T3) est la tension d'entrée (VIN) du régulateur de tension (18) placé en sortie de l'étage d'alimentation (17).

10. Dispositif de détection de présence (5) selon l'une des revendications 7 à 9, **caractérisé en ce que** le transistor MOSFET (14) de déclenchement de la minuterie est protégé par un étage de protection (15) qui le bloque en cas de surintensité.

11. Dispositif de détection de présence (5) selon la revendication précédente, **caractérisé en ce que** l'étage de protection (15) est constitué d'au moins une résistance shunt (R1) connectée à la source du transistor MOSFET (14), et polarisant la base d'un transistor bipolaire (T4) de protection dont le collecteur est relié à la grille du MOSFET (14).

12. Dispositif de détection de présence (5) selon la revendication précédente, **caractérisé en ce que** des résistance intermédiaires (R4, R5) sont prévues pour limiter l'intensité dans le collecteur et la base dudit transistor de protection (T4).

13. Dispositif de détection de présence selon l'une des revendications 7 à 12, **caractérisé en ce qu'**une varistance est connectée aux bornes du transistor MOSFET (14) de commande de la minuterie.

14. Dispositif de détection de présence (5) selon l'une quelconque des revendications précédentes, **caractérisé en ce que** le circuit électronique de commande (7) comporte un étage (20) de détection de la présence de tension à ses bornes.

15. Dispositif de détection de présence (5) selon la revendication précédente, **caractérisé en ce que** l'étage de détection (20) comporte un transistor bipolaire (T5) dont la base est polarisée entre la minuterie et la phase ou neutre, et dont le collecteur est relié à la tension de sortie régulée de l'étage d'alimentation (17), la tension du collecteur constituant un signal indiquant la présence d'une alimentation, ledit signal étant transmis au microcontrôleur (FP1) de la tête de détection (6).

16. Dispositif de détection de présence (5) selon l'une des revendications 14 et 15, **caractérisé en ce qu'**une diode (D3) est connectée entre l'étage de détection (20) de la présence de tension et l'étage d'alimentation (17) de la tête de détection (6).

17. Dispositif de détection de présence (5) selon l'une quelconque des revendications précédentes, **caractérisé en ce qu'**un pont de diode (13) est connecté aux bornes du circuit électronique de commande (7).

18. Dispositif de détection de présence (5) selon l'une quelconque des revendications précédentes, **caractérisé en ce que** la tête de détection (6) comporte un photo détecteur (8) et un potentiomètre(9) permettant son réglage qui sont alimentés via une sortie du microcontrôleur (FP1).

## Patentansprüche

1. Vorrichtung zur Präsenzerfassung (5), die mit einer Schaltuhr verbunden ist, anstelle eines Tastschalters (2) zwischen dem Phasenleiter oder Neutralleiter des Netzes und der Schaltuhr angeschlossen ist und einen Erfassungskopf (6) umfasst, der mit einem Mikrocontroller (FP1) und einem elektronischen Steuerschaltkreis (7), welcher ausgelegt ist, einerseits das Auslösen der Schaltuhr im Falle der Präsenzerfassung und andererseits die Versorgung des Kopfes (6) selbst im Falle einer zeitlich begrenzten Spannungsunterbrechung an ihren Enden zu bewirken, versehen ist, **dadurch gekennzeichnet, dass** die Versorgungsstufe (17) des Schaltkreises (7), der den Erfassungskopf versorgt, auf einem Strombegrenzer basiert, welcher eine konstante Stromstärke unabhängig von Spannungsschwankungen des Netzes liefert, einen immer gleich bleibenden Verbrauch impliziert und kein veränderliches Erwärmen erzeugt und der mit einer von dem Mikrocontroller (FP1) des Erfassungskopfes (6) gesteuerten Umschaltstufe (19) verbunden ist, welche erfasst, ob die Schaltuhr eine Halbwellen- oder eine Ganzwellenschaltuhr ist, und parallel zu einer Ohmschen Last (R16), eine zweite Ohmsche Last (R17) schalten lässt, um den Strom des Strombegrenzers zu verdoppeln, wenn eine Einfachschaltuhr erfasst wird.

2. Vorrichtung zur Präsenzerfassung (5) nach dem vorhergehenden Anspruch,
**dadurch gekennzeichnet, dass** der Strombegrenzer aus einem Leistungstransistor (T6) vom Typ MOSFET gebildet wird, der über wenigstens eine Zener-Diode (D4, D5), welche zwischen der Gate-Zone und einem Anschluss einer Ohmschen Last (R16, R17), welche wiederum mit der Source-Zone des Transistors (T6) verbunden ist, mit konstanter Stromeinprägung vorgespannt ist.

3. Vorrichtung zur Präsenzerfassung (5) nach dem vorhergehenden Anspruch,
**dadurch gekennzeichnet, dass** die Umschaltstufe (19) mit der Source-Zone des Transistors (T6) verbunden ist.

4. Vorrichtung zur Präsenzerfassung (5) nach dem vorhergehenden Anspruch,
**dadurch gekennzeichnet, dass** die Umschaltstufe (19) aus wenigstens einem bipolar vorgespannten Transistor (T7, TB) gebildet ist, wobei die Basis des Eingangstransistors (TB) von einem Signal (Sc) gesteuert wird, welches von dem Mikrocontroller (FP1) abgegeben wird, wobei die zweite Ohmsche Last (R17) am Ausgang des Ausgangstransitors (T7) angeordnet ist und wobei die Last (R17) und der Transistor (T7) parallel mit der ersten Ohmschen Last (R16) verbunden sind.

5. Vorrichtung zur Präsenzerfassung (5) nach einem der Ansprüche 3 und 4, **dadurch gekennzeichnet, dass** die Ohmschen Lasten (R16, R17) den gleichen Wert aufweisen.

6. Vorrichtung zur Präsenzerfassung (5) nach einem der vorhergehenden Ansprüche, **dadurch gekennzeichnet, dass** der Ausgang des Strombegrenzers mit dem Eingang eines Spannungsreglers (18), dessen Ausgang (Vcc) den Erfassungskopf (6) versorgt, und mit einem kapazitiven Speicher (C2), der an den Eingangsanschlüssen des Reglers (18) angeordnet ist, verbunden ist.

7. Vorrichtung zur Präsenzerfassung (5) nach einem der vorhergehenden Ansprüche, **dadurch gekennzeichnet, dass** die Auslösestufe (FP6) der Schaltuhr einen MOSFET-Transistor (14) umfasst, dessen Gate-Zone von einem von dem Mikrocontroller (FP1) ausgegebenen Signal (Sd) zur Präsenzerfassung gesteuert wird, wobei der Transistor (14) zwischen der Schaltuhr und dem Phasenleiter oder Neutralleiter des Netzes angeschlossen ist.

8. Vorrichtung zur Präsenzerfassung (5) nach dem vorhergehenden Anspruch, **dadurch gekennzeichnet, dass** das von dem Mikrocontroller (FP1) ausgegebene Signal (Sd) mittels einer Stufe von zwei bipolaren, kaskadenförmig angeordneten Transistoren (T2, T3) verstärkt wird, wobei das Signal (Sd) an der Basis des Eingangstransistors (T3) angelegt wird und das verstärkte Signal am Ausgang des zweiten Transistors (T2) an die Gate-Zone des MOSFET (14) geschickt wird.

9. Vorrichtung zur Präsenzerfassung (5) nach dem vorhergehenden Anspruch, **dadurch gekennzeichnet, dass** die Vorspannung der Stufe der zwei Transistoren (T2, T3) die Eingangsspannung (V1 N) des Spannungsreglers (18) ist, der am Ausgang der Versorgungsstufe (17) angeordnet ist.

10. Vorrichtung zur Präsenzerfassung (5) nach einem der Ansprüche 7 bis 9, **dadurch gekennzeichnet, dass** der MOSFET- Transistor (14) zum Auslösen der Schaltuhr durch eine Schutzstufe (15) geschützt ist, die diesen im Falle eines Überstroms sperrt.

11. Vorrichtung zur Präsenzerfassung (5) nach dem vorhergehenden Anspruch, **dadurch gekennzeichnet, dass** die Schutzstufe (15) aus wenigstens einem Shunt (R1) gebildet wird, der mit der Source-Zone des MOSFET-Transistors (14) verbunden ist und die Basis eines bipolaren Schutztransistors (T4) vorspannt, dessen Kollektor mit der Gate-Zone des MOSFET (14) verbunden ist.

12. Vorrichtung zur Präsenzerfassung (5) nach dem vorhergehenden Anspruch, **dadurch gekennzeichnet, dass** Zwischenwiderstände (R4, R5) vorgesehen sind, um die Intensität im Kollektor und an der Basis des Schutztransistors (T4) zu begrenzen.

13. Vorrichtung zur Präsenzerfassung (5) nach einem der Ansprüche 7 bis 12, **dadurch gekennzeichnet, dass** ein Varistor an den Anschlüssen des MOSFET-Transistors (14) zum Steuern der Schaltuhr angeschlossen ist.

14. Vorrichtung zur Präsenzerfassung (5) nach einem der vorhergehenden Ansprüche, **dadurch gekennzeichnet, dass** der elektronische Steuerschaltkreis (7) eine Stufe (20) zum Erfassen des Anliegens von Spannung an seinen Anschlüssen aufweist.

15. Vorrichtung zur Präsenzerfassung (5) nach dem vorhergehenden Anspruch, **dadurch gekennzeichnet, dass** die Erfassungsstufe (20) einen bipolaren Transistor (T5) umfasst, dessen Basis zwischen der Schaltuhr und dem Phasenleiter oder Neutralleiter vorgespannt ist und dessen Kollektor mit der Ausgangsspannung verbunden ist, welche von der Versorgungsstufe (17) geregelt wird, wobei die Spannung des Kollektors ein Signal erzeugt, das das Vorliegen einer Versorgung anzeigt, wobei das Signal an den Mikrocontroller (FP1) des Erfassungskopfes (6) übertragen wird.

16. Vorrichtung zur Präsenzerfassung (5) nach einem der Ansprüche 14 und 15, **dadurch gekennzeichnet, dass** eine Diode (D3) zwischen der Stufe zum Erfassen des Vorliegens von Spannung (20) und der Versorgungsstufe (17) des Erfassungskopfs (6) angeschlossen ist.

17. Vorrichtung zur Präsenzerfassung (5) nach einem der vorhergehenden Ansprüche, **dadurch gekennzeichnet, dass** eine Diodenbrücke (13) an den Anschlüssen des elektronischen Steuerschaltkreises (7) angeschlossen ist.

18. Vorrichtung zur Präsenzerfassung (5) nach einem der vorhergehenden Ansprüche, **dadurch gekennzeichnet, dass** der Erfassungskopf (6) einen Fotodetektor (8) und ein dessen Regelung ermöglichendes Potentiometer (9) umfasst, die über einen Ausgang des Mikrocontrollers (FP1) versorgt werden.

## Claims

1. Presence detection device (5) associated with a timer, connected between phase L or neutral N of the mains power supply and said timer in place of a pushbutton (2) and comprising a detector head (6) equipped with a microcontroller (FP1) and an electronic control circuit (7) capable of directing, on the one hand, the triggering of the timer in the event that presence is detected and, on the other hand, the supply of power to the head (6) even in the event of a limited-duration interruption of the voltage across its terminals,
**characterized in that** the power supply stage (17) of said circuit (7) that supplies power to the detector head is based on a current limiter providing a constant current intensity that is independent of the fluctuations of the mains voltage, involving a consumption that is always the same and which does not generate variable heating, connected to a switching stage (19) controlled by the microcontroller (FP1) of the detector head (6), the former detecting whether the timer is a half- or full-wave timer and switching in, in parallel to the resistive load (R16), a second resistive load (R17), in order to double the current of the current limiter when a half-wave timer is detected.

2. Presence detection device (5) according to the preceding claim, **characterized in that** the current limiter is composed of a MOSFET-type power transistor (T6) that is biased as a constant current source by at least one Zener diode (D4, D5) that is connected between the gate of the transistor and a terminal of a resistive load (R16, R17) additionally connected to the source of the transistor (T6).

3. Presence detection device (5) according to the preceding claim, **characterized in that** the switching stage (19) is connected to the source of the transistor (T6).

4. Presence detection device (5) according to the preceding claim, **characterized in that** the switching stage (19) is composed of at least one biased bipolar transistor (T7, TB), the base of the input transistor (TB) being controlled by a signal (Sc) issued by the microcontroller (FP1), the second resistive load (R17) being positioned at the output of the output transistor (T7), the load (R17) and the transistor (T7) being connected in parallel with the first resistive load (R16).

5. Presence detection device (5) according to one of Claims 3 and 4, **characterized in that** the resistive loads (R16, R17) are of the same value.

6. Presence detection device (5) according to any one of the preceding claims, **characterized in that** the output of the current limiter is connected to the input of a voltage regulator (18), the output (Vcc) of which supplies power to the detector head (6), and to a reservoir capacitor (C2) that is positioned across the input terminals of said regulator (18).

7. Presence detection device (5) according to any one of the preceding claims, **characterized in that** the stage for triggering (FP6) the timer comprises a MOSFET transistor (14) the gate of which is controlled by a presence detection signal (Sd) issued by the microcontroller (FP1), said transistor (14) being connected between the timer and the phase L or the neutral N of the mains power supply.

8. Presence detection device (5) according to the preceding claim, **characterized in that** the signal (Sd) issued by the microcontroller (FP1) is amplified using a stage with two bipolar transistors (T2, T3) arranged in cascade, said signal (Sd) being applied at the base of the input transistor (T3), the signal amplified at the output of the second transistor (T2) being sent to the gate of the MOSFET (14).

9. Presence detection device (5) according to the preceding claim, **characterized in that** the bias voltage of the stage with two transistors (T2, T3) is the input voltage (V1N) of the voltage regulator (18) placed at the output of the power supply stage (17).

10. Presence detection device (5) according to one of Claims 7 to 9, **characterized in that** the MOSFET transistor (14) for triggering the timer is protected by a protection stage (15) which blocks it in the event of overcurrent.

11. Presence detection device (5) according to the preceding claim, **characterized in that** the protection stage (15) is composed of at least one shunt resistor (R1) connected to the source of the MOSFET transistor (14) and biasing the base of a protection bipolar transistor (T4) the collector of which is linked to the gate of the MOSFET (14).

12. Presence detection device (5) according to the preceding claim, **characterized in that** intermediate resistors (R4, R5) are provided in order to limit the current intensity in the collector and base of said protection transistor (T4).

13. Presence detection device according to one of Claims 7 to 12, **characterized in that** a varistor is connected across the terminals of the MOSFET transistor (14) for controlling the timer.

14. Presence detection device (5) according to any one of the preceding claims, **characterized in that** the electronic control circuit (7) comprises a stage (20) for detecting the presence of voltage across its terminals.

15. Presence detection device (5) according to the preceding claim, **characterized in that** the stage for detecting (20) comprises a bipolar transistor (T5) the base of which is biased between the timer and the phase or neutral and the collector of which is linked to the regulated output voltage of the power supply stage (17), the voltage of the collector constituting a signal indicating the presence of a power supply, said signal being transmitted to the microcontroller (FP1) of the detector head (6).

16. Presence detection device (5) according to one of Claims 14 and 15, **characterized in that** a diode (D3) is connected between the stage for detecting (20) the presence of voltage and the stage for supplying power (17) to the detector head (6).

17. Presence detection device (5) according to any one of the preceding claims, **characterized in that** a diode bridge (13) is connected across the terminals of the electronic control circuit (7).

18. Presence detection device (5) according to any one of the preceding claims, **characterized in that** the detector head (6) comprises a photodetector (8) and a potentiometer (9) facilitating the adjustment thereof, which are supplied with power via an output of the microcontroller (FP1).
